# EUROPÄISCHE PATENTSCHRIFT

(11) **EP 2 848 598 B1**
(45) Veröffentlichungstag und Bekanntmachung des Hinweises auf die Patenterteilung: **04.11.2015**
(21) Anmeldenummer: 13184031.6
(22) Anmeldetag: 12.09.2013
(51) Int. Cl.: C04B 35/103, C04B 35/106, C04B 35/626

(54) **VERSATZ ZUR HERSTELLUNG EINES KOHLENSTOFFGEBUNDENEN ODER HARZGEBUNDENEN GEFORMTEN FEUERFESTEN ERZEUGNISSES, EIN VERFAHREN ZUR HERSTELLUNG EINES SOLCHEN ERZEUGNISSES, EIN SOLCHES ERZEUGNIS SOWIE EINE VERWENDUNG VON MAGNESIASPINELL-ZIRKONOXID**
MIXTURE FOR PRODUCING A CARBON BONDED OR RESIN BONDED MOULDED FIRE RESISTANT PRODUCT, METHOD FOR THE PRODUCTION OF SUCH A PRODUCT, SUCH A PRODUCT AND A USE OF MAGNESIA SPINEL ZIRCON OXIDE
MÉLANGE POUR LA FABRICATION D'UN PRODUIT REFRACTAIRE MOULÉ, LIÉ PAR DU CARBONE OU PAR DE LA RÉSINE, PROCÉDÉ DE FABRICATION D'UN TEL PRODUIT, PRODUIT DE CE TYPE ET UTILISATION DE SPINELLE DE MAGNÉSIE ET D'OXYDE DE ZIRCONIUM

(43) Veröffentlichungstag der Anmeldung: 18.03.2015
(73) Patentinhaber: Refractory Intellectual Property GmbH & Co. KG, 1100 Wien (AT)
(72) Erfinder: Müller, Mira-Annika, 9531 Bleiberg-Kreuth (AT); Nilica, Roland, 8715 Felstritz (AT); Wiesel, Martin, 8793 Trofaiach (AT); Mühlhäußer, Jürgen, 8700 Leoben (AT); Grasset-Bourdel, Renaud, 8770 St.Michael (AT)
(74) Vertreter: Berkenbrink, Kai-Oliver

(56) Entgegenhaltungen:
- WO-A1-2010/095637
- SU-A1- 1 054 330
- US-A- 3 498 769
- US-B1- 6 261 983

## Beschreibung

Die Erfindung betrifft einen Versatz zur Herstellung eines kohlenstoffgebundenen oder harzgebundenen geformten feuerfesten Erzeugnisses, ein Verfahren zur Herstellung eines solchen Erzeugnisses, ein solches Erzeugnis sowie eine Verwendung von Magnesiaspinell-Zirkonoxid.

Kohlenstoffgebundene und harzgebundene geformte feuerfeste Erzeugnissen werden aus einem Versatz hergestellt, der Kohlenstoff umfassende Komponenten umfasst. Soweit aus einem solchen Versatz kohlenstoffgebundene Erzeugnisse hergestellt werden, wird der Versatz derart mit Temperatur beaufschlagt, dass die Kohlenstoff umfassenden Komponenten verkoken und ein Koksgerüst bilden, in das die weiteren Komponenten des Versatzes fest eingebunden sind. Soweit aus einem Kohlenstoff umfassende Komponenten aufweisenden Versatz ein harzgebundenes Erzeugnis hergestellt werden soll, liegt wenigstens eine Kohlenstoff umfassende Komponente in Form von Harz vor. Dieses Harz kann selbsttätig oder unter Verwendung eines Härters aushärten. Nach dem Aushärten des Harzes ist aus dem Versatz ein harzgebundenes Erzeugnis erstellt, in dem das ausgehärtete Harz die übrigen Komponenten des Versatzes fest miteinander verbindet und dem Erzeugnis eine festes Struktur gibt.

WO 2010/095637 A1 offenbart einen ungebrannten feuerfesten Stein, der als Komponenten einen Aluminarohstoff, einen Kohlenstoffrohstoff, Spinell und Zirkonoxid umfasst.

Sowohl bei kohlenstoffgebundenen als auch bei harzgebundenen Erzeugnissen bildet sich die endgültige Kohlenstoffbindung in der Regel erst während des Einsatzes des jeweiligen Erzeugnisses und den dabei herrschenden Einsatztemperaturen aus.

Typische kohlenstoffgebundene oder harzgebundene geformte feuerfeste Erzeugnisse sind beispielsweise Schieberplatten in Stahlstranggusssystemen. In Stahlstranggusssystemen bilden Schieberplatten zusammen mit dem sie umgebenden Metallgehäuse einen Schieberverschluss. Solche Schieberverschlüsse dienen in Form von Pfannen-Schieberverschlüssen zur Regulierung der Durchflussmenge der Stahlschmelze durch das Pfannenverteilerrohr zwischen Gießpfanne und Tundish (Zwischenpfanne) oder in Form von Tundish-Schieberverschlüssen zur Regulierung der Durchflussmenge der Stahlschmelze durch den Eintauchausguss zwischen Tundish und Kokille.

Zur Regulierung der Durchflussmenge von Stahlqualitäten mit einer hochkorrosiven Pfannenschlacke werden insbesondere auch kohlenstoffgebundene oder harzgebundene Schieberplatten auf Basis Alumina eingesetzt. Zur Erhöhung der Korrosionsbeständigkeit der Schieberplatte gegenüber der hochkorrosiven Pfannenschlacke kann die Schieberplatte Anteile an Zirkon-Korund aufwiesen. Aufgrund dieses Anteils an Zirkon-Korund weisen solche Schieberplatten in der Regel einen geringen Anteil an Kieselsäure auf, wodurch die Korrosionsbeständigkeit der Schieberplatte erhöht ist.

Durch eine Erhöhung des Anteils an Zirkon-Korund in solchen Schieberplatten kann zwar die Korrosionsbeständigkeit dieser Platten erhöht werden. Allerdings kann der Anteil an Zirkon-Korund nicht beliebig erhöht werden, da die Sprödigkeit der Platten mit einem steigenden Gehalt an Zirkon-Korund ebenfalls zunimmt, wodurch die Thermoschockbeständigkeit und damit die Lebensdauer der Platten reduziert wird.

Der Erfindung liegt die Aufgabe zugrunde, einen Versatz zur Verfügung zu stellen, durch den ein kohlenstoffgebundenes oder harzgebundenes geformtes feuerfestes Erzeugnis, insbesondere in Form einer Schieberplatte, herstellbar ist, welches eine hohe Korrosionsbeständigkeit insbesondere gegenüber korrosiven Pfannenschlacken beim Stahlstrangguss aufweist. Insbesondere ist es eine Aufgabe der Erfindung, einen solchen Versatz zur Verfügung zu stellen, durch den Schieberplatten herstellbar sind, die sich gegenüber den aus dem Stand der Technik bekannten kohlenstoffgebundenen oder harzgebundenen Schieberplatten auf Basis Alumina und Zirkon-Korund durch eine verbesserte Korrosionsbeständigkeit auszeichnen.

Eine weitere Aufgabe der Erfindung ist es, ein Verfahren zur Herstellung eines solch kohlenstoffgebundenen oder harzgebundenen geformten feuerfesten Erzeugnisses aus einem solchen Versatz zur Verfügung zu stellen.

Eine weitere Aufgabe der Erfindung ist es, ein solch kohlenstoffgebundenes oder harzgebundenes geformtes feuerfestes Erzeugnis zur Verfügung zu stellen.

Zur Lösung der erstgenannten Aufgabe wird erfindungsgemäß zur Verfügung gestellt ein Versatz zur Herstellung eines kohlenstoffgebundenen oder harzgebundenen geformten feuerfesten Erzeugnisses, der die folgenden Komponenten umfasst:
eine oder mehrere Alumina umfassende Komponente;
- eine oder mehrere Kohlenstoff umfassende Komponenten;
- ein oder mehrere Antioxidantien zur Unterdrückung der Oxidierung des Kohlenstoffs;
- gegebenenfalls eine oder mehrere weitere Komponenten; dadurch gekennzeichnet, dass der Versatz ferner
- wenigstens eine Komponente in Form von Magnesiaspinell-Zirkonoxid aufweist, das in Form von Schmelzrohstoff vorliegt.

Die Erfindung beruht auf der Grunderkenntnis, dass die Korrosionsbeständigkeit von kohlenstoffgebundenen oder harzgebundenen geformten feuerfesten Erzeugnissen auf Basis Alumina, insbesondere in Form von Schieberplatten, gegenüber hochkorrosiven Pfannenschlacken dadurch verbessert werden kann, dass der Versatz zur Herstellung solcher Erzeugnisse wenigstens eine Komponente in Form von Magnesiaspinell-Zirkonoxid umfasst.

Bei Magnesiaspinell-Zirkonoxid handelt es sich um einen Rohstoff, der aus Magnesiaspinell (also MA-Spinell, MgO · Al₂O₃) und Zirkonoxid (also Zirkonia, ZrO₂) aufgebaut ist.

Erfindungsgemäß wurde festgestellt, dass durch die Verwendung von Magnesiaspinell-Zirkonoxid in Versätzen zur Herstellung kohlenstoffgebundener oder harzgebundener geformter feuerfester Erzeugnisse nicht nur die Korrosionsbeständigkeit der Erzeugnisse, sondern auch deren Thermoschockbeständigkeit verbessert werden kann. Im Gegensatz zur Verwendung von Zirkonkorund wird durch die Verwendung von Magnesiaspinell-Zirkonoxid die Thermoschockbeständigkeit der Erzeugnisse damit nicht verschlechtert sondern verbessert.

Die besten Werte für die Korrosionsbeständigkeit und Thermoschockbeständigkeit der aus dem erfindungsgemäßen Versatz hergestellten Erzeugnisse wurde festgestellt, wenn der Magnesiaspinell des Magnesiaspinell-Zirkonoxids im erfindungsgemäßen Versatz stöchiometrisch vorliegt, also mit einem Molverhältnis von MgO zu Al₂O₃ von 1:1. Erfindungsgemäß kann daher insbesondere vorgesehen sein, dass der Magnesiaspinell des Magnesiaspinell-Zirkonoxids im Versatz stöchiometrisch oder im wesentlich stöchiometrisch vorliegt, also beispielsweise mit einer Abweichung von maximal 10 % oder von maximal 5 % von der stöchiometrischen Zusammensetzung, also mit einem Molverhältnis von MgO zu Al₂O₃ im Bereich 1,1 bis 0,9 oder im Bereich von 1,05 bis 0,95. Nach einer Fortbildung dieses Erfindungsgedankens kann die Abweichung des Molverhältnisses von der stöchiometrischen Zusammensetzung auch maximal nur 4 %, 3 %, 2 % oder auch nur 1 % betragen. Es kann vorgesehen sein, dass der Magnesiaspinell des gesamten Magnesiaspinell-Zirkonoxids des Versatzes mit diesem Molverhältnis von MgO zu Al₂O₃ vorliegt. Es kann jedoch auch vorgesehen sein, dass Magnesiaspinell teilweise abweichend von diesem Molverhältnis vorliegt, beispielsweise in Randbereichen der Magnesiaspinell-Zirkonoxid-Körner des Versatzes beziehungsweise der daraus hergestellten Erzeugnisse.

Der Anteil an Zirkonoxid am Magnesiaspinell-Zirkonoxid kann beispielsweise im Bereich von 10 bis 65 Masse-% liegen, bezogen auf die Gesamtmasse des Magnesiaspinell-Zirkonoxids. Demnach kann der Anteil an Zirkonoxid am Magnesiaspinell-Zirkonoxid beispielsweise bei wenigstens 10, 13, 15, 18, 20, 22, 24, 26, 27, 28 oder 29 Masse-% liegen. Ferner kann der Anteil an Zirkonoxid am Magnesiaspinell-Zirkonoxid beispielsweise bei höchstens 65 Masse-% liegen, also beispielsweise auch bei höchstens 60, 55, 50, 45, 42, 40, 38, 36, 34, 33, 32 oder 31 Masse-%.

Bekanntermaßen wird Zirkonoxid in feuerfesten Erzeugnissen regelmäßig in stabilisierter Form eingesetzt, beispielsweise in durch Yttriumoxid stabilisierter Form. Erfindungsgemäß kann jedoch bevorzugt vorgesehen sein, dass Zirkonoxid im Magnesiaspinell-Zirkonoxid des erfindungsgemäßen Versatzes in unstabilisierter oder nur teilstabilisierter Form vorliegt.

Bevorzugt liegt die Magnesiaspinell-Zirkonoxid-Komponente des erfindungsgemäßen Versatzes in hochreiner Form vor, also als im wesentlichen reines Magnesiaspinell-Zirkonoxid. Das Magnesiaspinell-Zirkonoxid liegt im erfindungsgemäßen Versatz in Form von Schmelzrohstoff vor. Der Schmelzrohstoff kann beispielsweise gewonnen werden durch Erschmelzen der MgO, Al₂O₃ und ZrO₂ umfassenden Ausgangsrohstoffe und das anschließende Abkühlen der Schmelze. Die Schmelze kann anschließend zu körnigem Gut aufbereitet und in dieser Form im erfindungsgemäßen Versatz verwendet werden. Besonders bevorzugt liegt die Magnesiaspinell-Zirkonoxid-Komponente im erfindungsgemäßen Versatz in Form solcher Schmelzkörner vor. Ein Verfahren zur Herstellung eines Magnesiaspinell-Zirkonoxid-Schmelzrohstoffes wird beispielsweise in US 3,498,769 beschrieben.

Magnesiaspinell-Zirkonoxid kann im erfindungsgemäßen Versatz beispielsweise in einem Anteil im Bereich von 2 bis 35 Masse-% vorliegen, bezogen auf die Gesamtmasse des Versatzes. Demnach kann die Komponente in Form von Magnesiaspinell-Zirkonoxid im erfindungsgemäßen Versatz beispielsweise in einem Anteil von wenigstens 2 Masse-%, also beispielsweise auch in einem Anteil von wenigstens 4, 6, 8 oder 10 Masse-% vorliegen. Ferner kann Magnesiaspinell-Zirkonoxid im erfindungsgemäßen Versatz demnach beispielsweise in einem Anteil von höchstens 35 Masse-% vorliegen, also beispielsweise auch in einem Anteil von höchstens 32, 30, 28, 27, 26 oder 25 Masse-%.

Es kann vorgesehen sein, dass das Magnesiaspinell-Zirkonoxid in einer verhältnismäßig geringen Korngröße im Versatz vorliegt, beispielsweise in einer Korngröße von höchstens 3 mm, also beispielsweise auch in einer Korngröße von höchstens 2,5 mm, 2 mm, 1,5 mm oder 1,0 mm. Ferner kann vorgesehen sein, dass das Magnesiaspinell-Zirkonoxid im Versatz in einer Korngröße von nicht unter 0,1 mm vorliegt, also beispielsweise auch in einer Korngröße von nicht unter 0,2 oder 0,3 mm.

Der erfindungsgemäße Versatz basiert auf Alumina, also Al₂O₃ beziehungsweise Tonerde beziehungsweise Korund.

Die Alumina umfassenden Komponenten können in einem Anteil von 60 bis 90 Masse-% im Versatz vorliegen, bezogen auf die Gesamtmasse des Versatzes. Demnach können die Alumina umfassenden Komponenten beispielsweise in einem Anteil von wenigstens 60 Masse-%, also beispielsweise auch in einem Anteil von wenigstens 62, 64, 66, 68, 70, 71, 72, 73 oder 74 Masse-% im Versatz vorliegen. Ferner können die Alumina umfassenden Komponenten beispielsweise in einem Anteil von wenigstens 90 Masse-% im Versatz vorliegen, also beispielsweise auch in einem Anteil von höchstens 88, 86, 84, 82, 80, 79, 78, 77 oder 76 Masse-%.

Die Alumina umfassenden Komponenten können in Form von reiner Alumina oder hoch Alumina haltigen Rohstoffen vorliegen, insbesondere mit einem Anteil von Alumina von über 95, 96, 97, 98 oder 99 Masse-%, bezogen auf die Gesamtmasse der Alumina umfassenden Komponenten.

Beispielsweise können die Alumina umfassenden Komponenten in Form wenigstens einer der folgenden Komponenten vorliegen: Sinterkorund, Schmelzkorund, brauner Korund, Hohlkugelkorund, Tabulartonerde oder kalzinierter Tonerde. Nach einer bevorzugten Ausführungsform liegen die Alumina umfassenden Komponenten in Form von Tabulartonerde und kalzinierter Tonerde vor.

Nach einer Ausführungsform ist vorgesehen, dass die Alumina umfassenden Komponenten mit einer Korngröße von höchstens 5 mm im Versatz vorliegen, also beispielsweise auch in einer Korngröße von höchstens 4 mm, 3 mm, 2,5 mm oder 2 mm. Es kann vorgesehen sein, dass die Alumina umfassenden Komponenten im Bereich der folgenden Korngrenzen jeweils beispielsweise im Bereich der folgenden Massenanteile im Versatz vorliegen, jeweils bezogen auf die Gesamtmasse des Versatzes:
> 0,045 bis 5 mm: 44 bis 60 Masse-%;
> 0 bis 0,045 mm: 16 bis 30 Masse-%.

Kohlenstoff umfassende Komponenten, also Kohlenstoffträger, können in einem Anteil im Bereich von 2 bis 9 Masse-% im Versatz vorliegen, bezogen auf die Gesamtmasse des Versatzes. Demnach können die Kohlenstoff umfassenden Komponenten beispielsweise in einem Anteil von wenigstens 2 Masse-%, 2,5 Masse-%, 3 Masse-%, 3,5 Masse-% oder 4 Masse-% im Versatz vorliegen. Ferner können die Kohlenstoff umfassenden Komponenten beispielsweise in einem Anteil von höchstens 9, 8, 7, 6 oder 5 Masse-% im Versatz vorliegen.

Grundsätzlich können die Kohlenstoff umfassenden Komponenten in Form beliebiger Komponenten vorliegen, die aus der Feuerfesttechnologie bekannt sind, um Kohlenstoff zur Erzeugung einer Kohlenstoffbindung oder Harzbindung in einen feuerfesten Versatz einzutragen. Beispielsweise kann vorgesehen sein, dass die Kohlenstoff umfassenden Komponenten in Form einer oder mehrerer der folgenden Komponenten im Versatz vorliegen: Ruß, Petrolkoks, Graphit oder Harz.

Die Kohlenstoff umfassenden Komponenten dienen zum Einbringen von Kohlenstoff in den Versatz. Je nach Art dieser Komponenten bilden diese in einem ersten Schritt entweder eine Kohlenstoffbindung beziehungsweise Koksbindematrix oder eine Harzbindematrix aus. In einem zweiten Schritt, in der Regel beim Einsatz der jeweiligen Erzeugnisse und den dabei herrschenden Einsatzbedingungen, bilden die jeweiligen Matrizes eine endgültige Kohlenstoffbindung aus.

Soweit aus dem Versatz ein kohlenstoffgebundenes Erzeugnis hergestellt werden soll, wird der Versatz mit Temperatur derart beaufschlagt, dass die Kohlenstoff umfassende Komponenten eine Kohlenstoffbindung beziehungsweise Koksbindematrix ausbilden.

Soweit der Kohlenstoff in Form von Harz in den Versatz eingebracht ist, lässt man das Harz aushärten, so dass dieses eine Harzbindematrix ausbildet und mit den weiteren Komponenten des Versatzes ein harzgebundenen Erzeugnis bildet.

Harz als Kohlenstoff umfassende Komponente kann im Versatz insbesondere in Form wenigstens eines Kunstharzes vorliegen, insbesondere in Form wenigstens eines Kunstharzes aus der Gruppe der Phenol-Formaldehydharze. Beispielsweise kann Harz in Form wenigstens eines der folgenden Kunstharze vorliegen: Novolak oder Resol. Harz kann im Versatz, wie aus dem Stand der Technik bekannt, als Flüssigkeit oder in Form eines Pulvers vorliegen.

Die Kohlenstoff umfassenden Komponenten in Form von Ruß, Petrolkoks, Graphit können jeweils mehlfein, insbesondere beispielsweise in einer Korngröße unter 0,05 mm im Versatz vorliegen.

Der Versatz kann wenigstens ein Antioxidans zur Unterdrückung der Oxidierung des Kohlenstoffs aufweisen. Entsprechende Antioxidantien unterdrücken demnach die Oxidierung des Kohlenstoffs der Kohlenstoff umfassenden Komponenten während des Einsatzes einer aus dem Versatz hergestellten Schieberplatte, so dass der Kohlenstoff der Kohlenstoff umfassenden Komponenten nicht oxidiert.

Aus dem Stand der Technik ist bekannt, gattungsgemäßen Versätzen auf Basis von Alumina zur Herstellung kohlenstoffgebundener oder harzgebundener geformter feuerfester Erzeugnisse metallisches Silizium als Antioxidans beizufügen. Metallisches Silizium dient im Versatz nicht nur als Antioxidans für den Kohlenstoff, sondern kann mit dem Kohlenstoff auch Siliziumkarbid bilden, was die Festigkeit des aus dem Versatz gebildeten Erzeugnisses erhöht.

Zusätzlich zu metallischem Silizium als Antioxidans kann der Versatz metallisches Aluminium oder Borkarbid als Antioxidans aufweisen.

Insofern kann erfindungsgemäß vorgesehen sein, dass der erfindungsgemäße Versatz sowohl metallisches Silizium als auch metallisches Aluminium als Antioxidantien zur Unterdrückung der Oxidierung des Kohlenstoffs aufweist.

Die Gesamtmasse der Antioxidantien metallisches Silizium und metallisches Aluminium im Versatz kann beispielsweise im Bereich von 2 bis 10 Masse-% liegen, also beispielsweise auch bei wenigstens 3 Masse-%, 3,5 Masse-%, 4 Masse-% oder 4, 5 Masse-%. Die Obergrenze kann demnach bei einer Gesamtmasse von beispielsweise 10, 9, 8, 7 oder 6 Masse-% liegen. Die vorbezeichneten Massenangaben beziehen sich jeweils auf die Anteile an der Gesamtmasse des Versatzes.

Bevorzugt liegen metallisches Silizium und metallisches Aluminium in einer Korngröße unter 1 mm vor, beispielsweise auch in einer Korngröße unter 0,5 oder 0,1 mm.

Erfindungsgemäß kann vorgesehen sein, dass der erfindungsgemäße Versatz neben den vorbeschriebenen Komponenten, also wenigstens einer Alumina umfassenden Komponente, wenigstens einer Kohlenstoff umfassenden Komponente, wenigstens einem Antioxidans und wenigstens einer Komponente in Form von Magnesiaspinell-Zirkonoxid eine oder mehrere weitere Komponenten aufweist, bevorzugt jedoch in einer Gesamtmasse unter 5 Masse-%, bezogen auf die Gesamtmasse des Versatzes, also beispielsweise auch eine Gesamtmasse unter 4, 3, 2 oder 1 Masse-%.

Bevorzugt weist der Versatz keine oder nur geringe Anteile an Zirkonkorund auf, da durch die Anwesenheit von Zirkonkorund im Versatz die Flexibilität eines aus dem Versatz hergestellten Erzeugnisses verschlechtert werden kann. Soweit der Versatz Anteile an Zirkonkorund aufweist, kann erfindungsgemäß vorgesehen sein, dass diese Anteile unter 5 Masse-% liegen, bezogen auf die Gesamtmasse des Versatzes, also beispielsweise auch unter 4, 3, 2 oder 1 Masse-%.

Insbesondere dann, wenn die Kohlenstoff umfassenden Komponenten nicht in Form von Harz vorliegen, kann zur Verarbeitung des Versatzes, insbesondere um diesem nach der Formgebung eine ausreichende Grünfestigkeit verleihen zu können, der Versatz mit einem Binder beziehungsweise einem Primärbinder versehen werden, wobei insoweit auf die aus dem Stand der Technik bekannten Primärbindersysteme für kohlenstoffhaltige Versätze zurückgegriffen werden kann, insbesondere also beispielsweise auch auf Binder auf Basis von Harz beziehungsweise Kunstharz, beispielsweise Novolak. Binder können dem Versatz beispielsweise in Anteilen im Bereich von 3 bis 5 Masse-% zugegeben werden, bezogen auf 100 Masse-% des Versatzes ohne den Binder. Soweit ein harzbasierter Primärbinder verwendet wird, kann der Versatz einen Härter zur Vernetzung des Harzes aufweisen, wobei insoweit auf die aus dem Stand der Technik bekannten Härter für harzbasierte Primärbinder zurückgegriffen werden kann.

Soweit eine Kohlenstoff umfassende Komponenten in Form eines Harzes verwendet wird, um aus dem Versatz ein harzgebundenes Erzeugnis herzustellen, kann der Versatz eine weitere Komponente in Form eines Härters zur Aushärtung des Harzes aufweisen, soweit das Harz nicht selbsthärtend ist. Insoweit kann auf die aus dem Stand der Technik bekannten Härten zurückgegriffen werden. Beispielsweise kann Hexamethylentetramin als Härter für Novolakharze verwendet werden.

Gegenstand der Erfindung ist ferner ein Verfahren zur Herstellung eines kohlenstoffgebundenen oder harzgebundenen geformten feuerfesten Erzeugnisses, das die folgenden Schritte umfasst:
Zur Verfügungstellung eines erfindungsgemäßen Versatzes;
Formung des Versatzes zu einem Grünkörper;
Verkoken des Grünkörpers zu einem feuerfesten kohlenstoffgebundenen Erzeugnis oder Aushärten des Grünkörpers zu einem feuerfesten harzgebundenen Erzeugnis.

Der Versatz kann vor der Formgebung mit einem wie oben beschriebenen Binder und gegebenenfalls mit einem Härter gemischt werden. Die Mischung des Versatzes mit dem Binder und dem Härter kann beispielsweise in einem Zwangsmischer durchgeführt werden.

Der Versatz kann durch Pressen, insbesondere durch uniaxiales Pressen geformt werden. Durch das Pressen wird der Versatz zu einem geformten, ungebrannten Grünkörper geformt.

Nach der Formung des Versatzes zu einem Grünkörper wird dieser unterschiedlich behandelt, je nachdem ob ein kohlenstoffgebundenes oder harzgebundenes Erzeugnis aus dem Versatz erstellt werden soll und der damit einhergehenden, unterschiedlichen Zusammensetzung des Versatzes.

Zur Herstellung eines kohlenstoffgebundenen Erzeugnisses aus dem Versatz wird der Grünkörper anschließend in reduzierender Atmosphäre verkokt, wodurch sich eine Kohlenstoffbindung beziehungsweise eine Koksbindematrix ausbildet. Die Verkokung kann beispielsweise bei Temperaturen im Bereich von 1.000 bis 1.400 °C durchgeführt werden.

Zur Herstellung eines harzgebundenen Erzeugnisses aus dem Versatz lässt man das Harz in dem Grünkörper aushärten. Die Aushärtung des Harzes kann in der Regel dadurch beschleunigt werden, dass man den Grünkörper erhöhten Temperaturen aussetzt, beispielsweise im Bereich von 100 bis 400 °C.

Bevorzugt wird der erfindungsgemäße Versatz zur Herstellung von Schieberplatten für Anlagen zum Stranggießen von Stahl verwendet. Dabei kann der Versatz sowohl zur Herstellung von Tundish-Schieberplatten als auch zur Herstellung von Pfannen-Schieberplatten Verwendung finden.

Soweit aus dem Versatz Schieberplatten hergestellt werden, ist der Grünkörper des erfindungsgemäßen Verfahrens demnach der Grünkörper einer Schieberplatte, der zu einer Schieberplatte für einen Tundish- oder Pfannen-Schieberverschluss für ein Stranggusssystem verkokt wird.

Gegenstand der Erfindung ist ferner ein kohlenstoffgebundenes oder harzgebundenes feuerfestes Erzeugnis, das durch ein erfindungsgemäßes Verfahren hergestellt ist.

Ein solches Erzeugnis kann, wie zuvor ausgeführt, insbesondere eine Schieberplatte sein. Ein erfindungsgemäßes Erzeugnis in Form einer Schieberplatten kann, wie aus dem Stand der Technik bekannt, vor seinem Einsatz noch pechgetränkt werden. Gegenstand der Erfindung ist demnach auch eine solch pechgetränkte Schieberplatte.

Charakteristisch für ein erfindungsgemäßes Erzeugnis ist in chemischer Hinsicht insbesondere der höhere Gehalt an Magnesiumoxid (MgO) im Vergleich zu gattungsgemäßen Erzeugnissen nach dem Stand der Technik. Dieser Gehalt an Magnesiumoxid wird durch das Magnesiaspinell-Zirkonoxid in den erfindungsgemäßen Versatz und damit in das aus dem erfindungsgemäßen Versatz hergestellte Erzeugnis eingetragen. Typischerweise liegt der Anteil an Magnesiumoxid in erfindungsgemäßen Versätzen und den daraus hergestellten Erzeugnissen im Bereich von 1,5 bis 6 Masse-%, insbesondere im Bereich von 2 bis 5 oder von 2 bis 4 Masse-%. Demgegenüber liegen die Anteile an Magnesiumoxid in Versätzen und Erzeugnissen nach dem Stand der Technik typischerweise unter 1 Masse-% und regelmäßig auch unter 0,5 Masse-%.

Das Gefüge eines erfindungsgemäßen kohlenstoffgebundenen Erzeugnisses zeichnet sich durch eine Kohlenstoff- beziehungsweise Koksbindematrix aus, in die Alumina und Magnesiaspinell-Zirkonoxid als Hauptphasen eingebunden sind. Daneben können Nebenphasen vorliegen, beispielsweise Silizium und Siliziumkarbid, Aluminium und Aluminiumkarbid, Borkarbid, etwaige weitere Nebenphasen sowie Reaktionsprodukte aus diesen Haupt- und Nebenphasen.

Das Gefüge eines erfindungsgemäßen harzgebundenen Erzeugnisses zeichnet sich durch eine ausgehärtete Harzbindematrix aus, in die Alumina und Magnesiaspinell-Zirkonoxid als Hauptphasen eingebunden sind. Daneben können die vorgenannten Nebenphasen vorliegen.

Beim Einsatz der erfindungsgemäßen Erzeugnisse und den dabei herrschenden Einsatztemperaturen bildet sich aus der Koksbindematrix oder der Harzbindematrix eine "echte" Kohlenstoffbindematrix in Form eines festen Kohlenstoffgerüstes aus, in das die vorgenannten Haupt- und Nebenphasen eingebunden sind.

Wie zuvor ausgeführt, zeichnen sich aus dem erfindungsgemäßen Versatz hergestellte, erfindungsgemäße Erzeugnisse durch hervorragende feuerfeste Eigenschaften aus.

In der nachfolgenden Tabelle 1 sind Bereiche von Werten für mögliche feuerfeste beziehungsweise physikalische Eigenschaften von erfindungsgemäßen Erzeugnisses angegeben.

**Tabelle 1**

| Physikalische Eigenschaft | Wertebereich |
|---|---|
| Rohdichte [g/cm³] | 2,95-3,05 |
| Porosität [Vol.-% ] | 11,0-12,5 |
| Dynamisches Elastizitätsmodul bei Raumtemperatur (Schalllaufzeitmessung) [GPa] | 60-68 |
| Dynamisches Elastizitätsmodul bei 1.400 °C reduzierender Atmosphäre (Schalllaufzeitmessung) [GPa] | 64-72 |
| Heißbiegefestigkeit bei 1.400 °C reduzierender Atmosphäre [MPa] | 14-16 |
| Brucharbeit Gf bei 1.400 °C reduzierender Atmosphäre [J/m²] | 220-280 |
| Nominelle Kerbzugfestigkeit σNT bei 1.400 °C reduzierender Atmosphäre [MPa] | 5,5-6,3 |
| Charakteristische Länge bei 1.400 °C reduzierender Atmosphäre [mm] | 460-500 |
| Thermoschockparameter R nach Kingery bei 1.400 °C [K] | 7,5-8,5 |
| Thermoschockparameter Rst nach Hasselmann bei 1.400 °C [Km^{1/2}] | 3,5-4,5 |

Die vorstehenden physikalischen Eigenschaften sind nach den folgenden Normen beziehungsweise Verfahren bestimmt:
Rohdichte und Porosität gemäß DIN 993-1:1995.
Dynamisches Elastizitätsmodul gemäß DIN 51942:2002.
Heißbiegefestigkeit gemäß DIN EN 993-7:1998.

Brucharbeit, charakteristische Länge und nominelle Kerbzugfestigkeit gemäß den Angaben in der folgenden Literaturstelle, wobei die Messungen bei 1.100 °C durchgeführt werden: Harmuth H., Manhart Ch., Auer Th., Gruber D.: "Fracture Mechanical Characterisation of Refractories and Application for Assessment and Simulation of the Thermal Shock Behaviour", CFI Ceramic Forum International, Vol. 84, Nr. 9, pp. E80 - E86 (2007).

Thermoschockparameter R nach Kingery gemäß den Angaben in der folgenden Literaturstelle: Kingery WD.: "Factors Affecting Thermal Stress Resistance of Ceramics Materials", J. Am. Ceram. Soc. 1955; 38 (1): 3-15.

Thermoschockparameter Rst nach Hasselmann gemäß den Angaben in der folgenden Literaturstelle: Hasselmann DPH: "Unified theory of thermal shock fracture intiation and crack propagation in brittle ceramics", J. Am. Ceram. Soc. 1969; 52 (11): 600-04.

Ferner zeichnen sich die erfindungsgemäßen Erzeugnisse durch hohe Festigkeiten bei der Durchführung des Keilspalttestes aus. Messkurven, die bei der Durchführung von Keilspalttests an Ausführungsbeispielen erfindungsgemäßer Erzeugnisse erstellt worden sind, sowie ein Vergleichsbeispiels für ein Erzeugnis nach dem Stand der Technik, sind bei der nachfolgenden Darstellung von Ausführungsbeispielen der Erfindung näher erläutert.

Der Keilspalttest wird durchgeführt gemäß der oben angegebenen Literaturstelle in CFI Ceramic Forum International, Vol. 84, Nr. 9, pp. E80 - E86 (2007).

Gegenstand der Erfindung ist ferner ein kohlenstoffgebundenes oder harzgebundenes geformtes feuerfestes Erzeugnis, das wenigstens eine der in Tabelle 1 angegebenen physikalischen Eigenschaften in dem jeweils angegebenen Bereich aufweist.

Schließlich ist Gegenstand der Erfindung die Verwendung von Magnesiaspinell-Zirkonoxid in einem Versatz auf Basis von Alumina zur Herstellung von kohlenstoffgebundenen oder harzgebundenen Schieberplatten für ein Stahlstranggusssystem.

Die Verwendung kann mit der Maßgabe erfolgen, dass der Versatz erfindungsgemäß konfektioniert ist und dass das erfindungsgemäße Verfahren durchgeführt wird.

In der nachfolgenden Tabelle 2 sind zwei Versatzbeispiele V1 und V2 angegeben, wobei Versatzbeispiel V1 ein Versatz gemäß dem Stand der Technik und Versatz V2 ein erfindungsgemäßes Versatzbeispiel in Form eines Versatzes zur Herstellung eines kohlenstoffgebundenen Erzeugnisses darstellt.

**Tabelle 2**

| Rohstoff | V1 | V2 |
|---|---|---|
| Tabulartonerde > 0,045-2,0 mm | 50 | 50 |
| Zirkonkorund 0,3-1,0 mm | 15 | - |
| Magnesiaspinell-Zirkonoxid 0,3-1,0 mm | - | 15 |
| Tabulartonerde > 0,0-0,045 mm | 25 | 25 |
| Antioxidantien | 6 | 6 |
| Kohlenstoffträger | 4 | 4 |

Die Angaben zu den Versätzen V1 und V2 sind Anteile in Masse-% der Rohstoffe gemäß Spalte 1, jeweils bezogen auf die Gesamtmasse des jeweiligen Versatzes.

Der nicht erfindungsgemäße Versatz V1 sowie der erfindungsgemäße Versatz V2 wurden anschließend gemäß dem erfindungsgemäßen Verfahren behandelt. Insofern wurden die Versätze V1 und V2 zunächst jeweils mit 4,4 Masse-% Bindemittel in Form eines Harzes, bezogen auf 100 Masse-% des jeweiligen Versatzes ohne dieses Bindemittel, in einem Zwangsmischer gemischt und anschließend durch uniaxiales Pressen zu einem Grünkörper geformt. Der jeweilige Grünkörper wies die Form einer aus diesem herzustellenden Schieberplatte auf.

Der Grünkörper wurde schließlich bei 1.200 °C zu einem feuerfesten kohlenstoffgebundenen Erzeugnis in Form einer Schieberplatte verkokt.

In der nachfolgenden Tabelle 3 sind die physikalischen Eigenschaften der danach hergestellten Schieberplatten angegeben, wobei die aus dem nicht erfindungsgemäßen Versatz V1 hergestellte Schieberplatte mit S1 und die aus dem erfindungsgemäßen Versatz V2 hergestellte Schieberplatte mit S2 bezeichnet ist.

**Tabelle 3**

| Physikalische Eigenschaft | S1 | S2 |
|---|---|---|
| Rohdichte [g/cm³] | 3,02 | 3,0 |
| Porosität [Vol.-% ] | 12,7 | 11,7 |
| Dynamisches Elastizitätsmodul bei Raumtemperatur (Schalllaufzeitmessung) [GPa] | 69 | 64 |
| Dynamisches Elastizitätsmodul bei 1.400 °C oxidierender Atmosphäre (Schalllaufzeitmessung) [GPa] | 82 | 68 |
| Brucharbeit Gf bei 1.400 °C reduzierender Atmosphäre [J/m²] | 186 | 250 |
| Nominelle Kerbzugfestigkeit σNT [MPa] | 5,9 | 5,9 |
| Charakteristische Länge [mm] | 433,4 | 485,6 |
| Thermoschockparameter Rst nach Kingery bei 1.400 °C [K] | 6,9 | 7,9 |
| Thermoschockparameter Rst nach Hasselmann bei 1.400 °C [Km^{1/2}] | 3,2 | 3,9 |

Die chemische Analyse der Schieberplatten S1 und S2 ist in der nachfolgenden Tabelle 4 angegeben.

**Tabelle 4**

| Oxid | S1 | S2 |
|---|---|---|
| MgO | 0,2 | 3,0 |
| Al₂O₃ | 86,0 | 81,8 |
| SiO₂ | 9,7 | 9,9 |
| ZrO₂ | 3,8 | 4,8 |
| Rest | 0,3 | 0,5 |

In Tabelle 4 sind die Anteile an den Oxiden wiederum in Anteilen in Masse-% angegeben, bezogen auf die Gesamtmasse des jeweiligen Erzeugnisses.

Zur Überprüfung der Korrosionsbeständigkeit der aus den Versätzen V1 und V2 herstellbaren feuerfesten Erzeugnisse wurden aus den Versätzen V1 und V2 gemäß dem Ausführungsbeispiel zur Herstellung der Schieberplatten S1 und S2 Steinsegmente hergestellte, und zwar Steinsegmente F1 aus dem Versatz V1 und Steinsegmente F2 aus dem Versatz V2. Diese Steinsegmente F1 und F2 wurden als Teil einer Ofenausmauerung verwendet, an der ein Korrosionstest gemäß dem sogenannten "Induktion Tiegel Ofen Test" (ITO-Test) wie folgt durchgeführt wurde: Zunächst wurde ein Ofen errichtet, dessen feuerfeste Ausmauerung wandseitig aus Steinsegmenten gebildet war. Im späteren Schlackenbereich war die Ausmauerung aus den Steinsegmenten F1 und F2 gebildet. Die feuerfeste Ausmauerung umschloss einen kreiszylindrischen Ofenraum, in den ein passender, kreiszylindrischer Metalleinsatz (60 kg Stahl) gesetzt wurde. Der Metalleinsatz wurde durch Spulen, die ringförmig außen um die Ausmauerung geführt waren, auf 1.600 °C erhitzt und erschmolzen. Auf die Stahlschmelze wurde ein Schlackenpulver (3 kg mit der chemischen Zusammensetzung gemäß Tabelle 5) aufgegeben, welches aufschmolz und einen Schlackenbereich mit einer korrosiven Schlacke bildete. Die Schlacke reagierte in diesem Schlackenbereich mit den Steinsegmenten F1 und F2 und beschädigte diese hierdurch korrosiv. Die Steinsegmente wurden insgesamt etwa 5 Stunden durch die Schlacke korrodiert, wobei die Schlacke etwa jede Stunde erneuert wurde. Anschließend wurde die Ausmauerung ausgebaut und an den Steinsegmenten F1 und F2 der Korrosionsgrad getestet, nämlich die Verschleißtiefe und die Verschleißfläche.

**Tabelle 5**

| Bestandteil der Schlacke | Anteil in der Schlacke [Masse-% in Bezug auf die Gesamtmasse der Schlacke] |
|---|---|
| CaO | 37,6 |
| MgO | 4,2 |
| MnO | 11,1 |
| Al₂O₃ | 10,0 |
| SiO2 | 10,1 |
| Fe2O3 | 26,1 |
| F | 0,5 |
| S | 0,4 |

In Tabelle 6 sind die Ergebnisse dieses Korrosionstests wiedergegeben. Dabei wurden die gemessene Verschleißfläche und Verschleißtiefe der Steinsegmente F1 jeweils normalisiert mit 100 % festgesetzt und in Bezug zu den entsprechenden Werten für die Steinsegmente F2 gesetzt. Die Verschleißfläche ist die maximale Querschnittsfläche der korrodierten Bereiche während die Verschleißtiefe ist die maximale Verschleißtiefe der korrodierten Bereiche ist. Wie die Werte in Tabelle 6 zeigen, beträgt der Verschleiß der erfindungsgemäßen Steinsegmente F2 nur 62 % der Verschleißfläche und nur 80 % der Verschleißtiefe der Steinsegmente F1 nach dem Stand der Technik.

**Tabelle 6**

| Größe | F1 | F2 |
|---|---|---|
| Normalisierte Verschleißfläche | 100 % | 62 % |
| Normalisierte Verschleißtiefe | 100 % | 80 % |

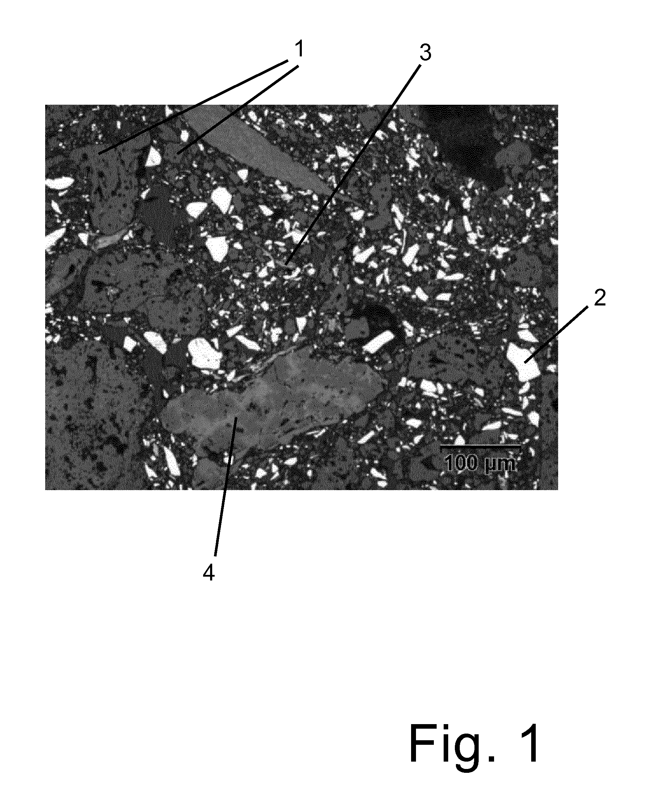

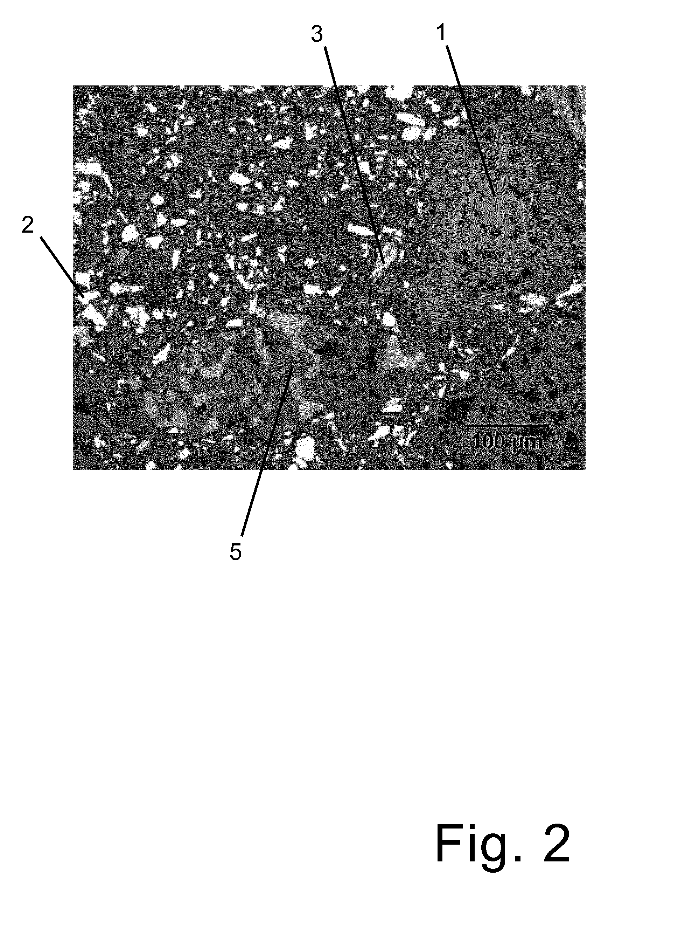

In den nachfolgenden Abbildungen zeigen die Figuren 1 bis 2 Schliffbilder der Schieberplatten gemäß S1 und S2. Der schwarze Balken unten rechts in den Figuren entspricht jeweils einer Länge von 100 µm.

Figur 1 zeigt das Schliffbild der Schieberplatte S1 gemäß dem Stand der Technik. Zu erkennen sind die Phasen Tabulartonderde (1), Antioxidans (2) sowie Kohlenstoffträger (3). Daneben liegt als weitere Phasen Zirkonkorund (4) vor.

Figur 2 zeigt das Schliffbild des Ausführungsbeispiels der erfindungsgemäßen Schieberplatte S2. Zu erkennen sind wiederum die Phasen Tabulartonderde (1), Antioxidans (2) sowie Kohlenstoffträger (3). Daneben ist als weitere Phase Magnesiaspinell-Zirkonoxid (5) zu erkennen.

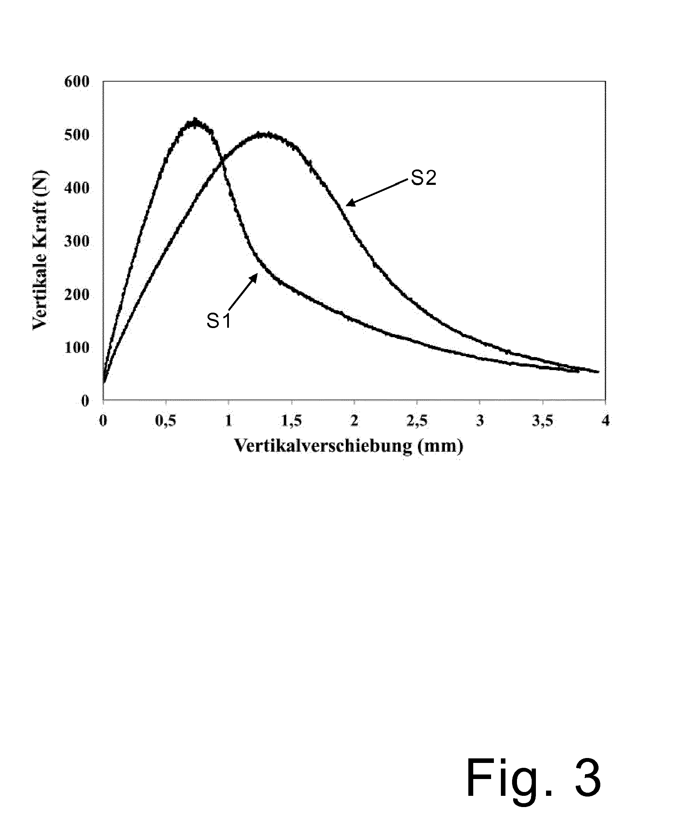

Schließlich zeigt Figur 3 Messverläufe bei der Durchführung des Keilspalttests an den Erzeugnissen S1 und S2. Die Keilspalttests wurden bei 1.400 °C unter reduzierenden Bedingungen durchgeführt.

Dabei ist in Figur 3 die Messkurve bei der Durchführung des Keilspalttests an der Schieberplatte S1 mit S1 und bei der Durchführung des Keilspalttests an der Schieberplatte S2 mit S2 gekennzeichnet. Die Keilspalttests wurden bei 1.400 °C in reduzierender Atmosphäre durchgeführt. Zu erkennen ist, dass bei beiden Schieberplatten S1 und S2 eine ähnliche maximale vertikale Kraft von etwa 500 N gemessen worden ist. Jedoch ist die gemessene Brucharbeit, die durch die Fläche unter der jeweiligen Kurve repräsentiert wird, bei der erfindungsgemäßen Schieberplatte S2 deutlich größer als bei der Schieberplatte S1, auch ist die horizontale Position des Kraftmaximums von S2 größer als jene von S1. Durch die höhere Brucharbeit und die größere horizontale Position des Kraftmaximums weist die Schieberplatte S2 gegenüber der Schieberplatte S1 eine deutlich höhere Flexibilität auf.

## Patentansprüche

1. Versatz zur Herstellung eines kohlenstoffgebundenen oder harzgebundenen geformten feuerfesten Erzeugnisses, umfassend die folgenden Komponenten:
1.1 eine oder mehrere Alumina umfassende Komponenten,
1.2 eine oder mehrere Kohlenstoff umfassende Komponenten,
1.3 ein oder mehrere Antioxidantien zur Unterdrückung der Oxidierung des Kohlenstoffs,
1.4 gegebenenfalls eine oder mehrere weitere Komponenten, **dadurch gekennzeichnet, dass** der Versatz ferner
1.5 wenigstens eine Komponente in Form von Magnesiaspinell-Zirkonoxid aufweist, das in Form von Schmelzrohstoff vorliegt.

2. Versatz nach wenigstens einem der vorhergehenden Ansprüche, bei dem das Magnesiaspinell-Zirkonoxid in einem Anteil im Bereich von 2 bis 35 Masse-% vorliegt, bezogen auf die Gesamtmasse des Versatzes.

3. Versatz nach wenigstens einem der vorhergehenden Ansprüche, bei dem der Magnesiaspinell des Magnesiaspinell-Zirkonoxids stöchiometrisch vorliegt.

4. Versatz nach wenigstens einem der vorhergehenden Ansprüche, bei dem der Anteil an Zirkonoxid am Magnesiaspinell-Zirkonoxids im Bereich von 10 bis 65 Masse-% vorliegt, bezogen auf die Gesamtmasse des Magnesiaspinell-Zirkonoxids.

5. Versatz nach wenigstens einem der vorhergehenden Ansprüche, bei dem das Magnesiaspinell-Zirkonoxid in einer Korngröße von maximal 3,0 mm vorliegt.

6. Versatz nach wenigstens einem der vorhergehenden Ansprüche, bei dem die Alumina umfassenden Komponenten in einem Anteil im Bereich von 60 bis 90 Masse-% vorliegen, bezogen auf die Gesamtmasse des Versatzes.

7. Versatz nach wenigstens einem der vorhergehenden Ansprüche, bei dem die Kohlenstoff umfassenden Komponenten in einem Anteil in Bereich von 2 bis 9 Masse-% vorliegen, bezogen auf die Gesamtmasse des Versatzes.

8. Versatz nach wenigstens einem der vorhergehenden Ansprüche mit wenigstens einem der folgenden Antioxidantien: Metallisches Silizium, metallisches Aluminium oder Borkarbid.

9. Verfahren zur Herstellung eines kohlenstoffgebundenen geformten feuerfesten Erzeugnisses, umfassend die folgenden Schritte.
9.1 Zur Verfügungstellung eines Versatzes nach wenigstens einem der vorhergehenden Ansprüche;
9.2 Formen des Versatzes zu einem Grünkörper;
9.3 Verkoken des Grünkörpers zu einem feuerfesten kohlenstoffgebundenen Erzeugnis oder Aushärten des Grünkörpers zu einem feuerfesten harzgebundenen Erzeugnis.

10. Kohlenstoffgebundenes oder harzgebundenes geformtes feuerfestes Erzeugnis, hergestellt durch ein Verfahren nach Anspruch 9.

11. Verwendung von Magnesiaspinell-Zirkonoxid in Form von Schmelzrohstoff in einem Versatz auf Basis von Alumina zur Herstellung von kohlenstoffgebundenen oder harzgebundenen Schieberplatten für ein Stahlstranggusssystem.

## Claims

1. A batch for the production of a carbon-bonded or resin-bonded shaped refractory product, comprising the following components:
1.1 one or more alumina-comprising components,
1.2 one or more carbon-comprising components,
1.3 one or more antioxidants for suppressing oxidation of the carbon,
1.4 if appropriate, one or more further components, **characterized in that** the batch further comprises
1.5 at least one component in the form of magnesia spinel-zirconium oxide which is in the form of fused raw material.

2. The batch as claimed in at least one of the preceding claims, in which the magnesia spinel-zirconium oxide is present in a proportion in the range 2% to 35% by weight with respect to the total weight of the batch.

3. The batch as claimed in at least one of the preceding claims, in which the magnesia spinel of the magnesia spinel-zirconium oxide is present in a stoichiometric quantity.

4. The batch as claimed in at least one of the preceding claims, in which the proportion of zirconium oxide an the magnesia spinel-zirconium oxide is present in the range 10% to 65% by weight with respect to the total weight of the magnesia spinel-zirconium oxide.

5. The batch as claimed in at least one of the preceding claims, in which the maximum grain size of the magnesia spinel-zirconium oxide which is present is 3.0 mm.

6. The batch as claimed in at least one of the preceding claims, in which the alumina-comprising components are present in a proportion in the range 60% to 90% by weight with respect to the total weight of the batch.

7. The batch as claimed in at least one of the preceding claims, in which the carbon-comprising components are present in a proportion in the range 2% to 9% by weight with respect to the total weight of the batch.

8. The batch as claimed in at least one of the preceding claims, with at least one of the following antioxidants: metallic silicon, metallic aluminium or boron carbide.

9. A process for the production of a carbon-bonded shaped refractory product, which comprises the following steps:
9.1 providing a batch according to at least one of the preceding claims;
9.2 shaping the batch to form a green body;
9.3 carbonizing the green body to form a refractory carbon-bonded product or curing the green body to form a refractory resin-bonded product.

10. A carbon-bonded or resin-bonded shaped refractory product produced by means of a process as claimed in claim 9.

11. Use of magnesia spinel-zirconium oxide in the form of fused raw material in an alumina-based batch for the production of carbon-bonded or resin-bonded slide plates for a steel strand casting system.

## Revendications

1. Composition destinée à fabriquer un produit réfractaire moulé, lié par carbone ou lié par résine, comprenant les composants suivants :
1.1 un ou plusieurs composants comprenant de l'alumine,
1.2 un ou plusieurs composants comprenant du carbone,
1.3 un ou plusieurs antioxydants pour atténuer l'oxydation du carbone,
1.4 le cas échéant, un ou plusieurs composants supplémentaires,
**caractérisé en ce que** la composition comporte par ailleurs
1.5 au moins un composant sous la forme de spinelle de magnésie-oxyde de zircone qui se présente sous la forme d'une matière première en fusion.

2. Composition selon au moins l'une quelconque des revendications précédentes, dans laquelle le spinelle de magnésie-oxyde de zircone est présent dans une part de l'ordre de 2 à 35 % en masse, en rapport à la masse totale de la composition.

3. Composition selon au moins l'une quelconque des revendications précédentes, dans laquelle le spinelle de magnésite dans le spinelle de magnésie-oxyde de zircone se présente sous forme stoechiométrique.

4. Composition selon au moins l'une quelconque des revendications précédentes, dans laquelle la part d'oxyde de zircone dans le spinelle de magnésie-oxyde de zircone est présente dans l'ordre de 10 à 65 % en masse, en rapport à la masse totale du spinelle de magnésie-oxyde de zircone.

5. Composition selon au moins l'une quelconque des revendications précédentes, dans laquelle le spinelle de magnésie-oxyde de zircone est présent dans une grosseur de grains d'un maximum de 3,0 mm.

6. Composition selon au moins l'une quelconque des revendications précédentes, dans laquelle les composants comprenant de l'alumine sont présents dans une part de l'ordre de 60 à 90 % en masse, en rapport à la masse totale de la composition.

7. Composition selon au moins l'une quelconque des revendications précédentes, dans laquelle les composants comprenant du carbone sont présents dans une part de l'ordre de 2 à 9 % en masse, en rapport à la masse totale de la composition.

8. Composition selon au moins l'une quelconque des revendications précédentes, avec au moins l'un des antioxydants suivants : silicium métallique, aluminium métallique ou carbure de bore.

9. Procédé destiné à fabriquer un produit réfractaire moulé lié par carbone, comprenant les étapes suivantes :
9.1 Mise à disposition d'une composition selon au moins l'une quelconque des revendications précédentes :
9.2 Moulage de la composition en un corps de base ;
9.3 Cokéfaction du corps de base en un produit réfractaire lié par carbone ou durcissement du corps de base en un produit réfractaire lié par résine.

10. Produit réfractaire moulé lié par carbone ou lié par résine, fabriqué d'après un procédé selon la revendication 9.

11. Utilisation de spinelle de magnésie-oxyde de zircone sous la forme d'une matière première en fusion dans une composition sur base d'alumine pour fabriquer des plaques coulissantes liées par carbone ou liées par résine pour un système de coulée continue d'acier.
